# EUROPÄISCHE PATENTSCHRIFT

(11) **EP 0 631 268 B1**
(45) Veröffentlichungstag und Bekanntmachung des Hinweises auf die Patenterteilung: **14.05.1997**
(21) Anmeldenummer: 94109626.5
(22) Anmeldetag: 22.06.1994
(51) Int. Cl.: G08G 1/127

(54) **Verfahren und Vorrichtung zur Früherkennung und Meldung von Fehler- und Gefahrenquellen in schienengebundenen und schienenlosen Fahrzeugen des öffentlichen Nahverkehrs**
Method and apparatus for early detection and reporting of errors and risks in railway and road vehicles of urban transport
Procédé et dispositif pour le dépistage précoce et la signalisation des erreurs et des risques dans les véhicules ferroviaires et routiers des transports urbains

(30) Priorität: 26.06.1993 DE 4321348
(43) Veröffentlichungstag der Anmeldung: 28.12.1994
(73) Patentinhaber: E Line - Elektro-Electronic GmbH, D-44869 Bochum (DE)
(72) Erfinder:
(74) Vertreter: Eichelbaum, Lambert, Dipl.-Ing.

(56) Entgegenhaltungen:
- EP-A- 0 136 691
- WO-A-93/11443
- FR-A- 2 365 249
- US-A- 4 009 375
- PROCEEDINGS OF IEEE VEHICULAR TECHNOLOGY SOCIETY - INTERNATIONAL CONFERENCE ON TRANSPORTATION ELECTRONICS, 15. September 1980, Dearborn, Michigan, SS 1-5; S. CATTON: 'TORONTO TRANSIT COMMUNICATIONS AND INFORMATION SYSTEM EVALUATION OF OPERATIONAL TESTS'

## Beschreibung

Die Erfindung betrifft ein Verfahren und eine Vorrichtung zur Früherkennung und Meldung von Fehlern und Gefahren für ein öffentliches Nahverkehrssystem, welches schienengebundene und schienenlose Fahrzeuge mit Empfangs-Sendeeinheiten sowie ortsfeste Empfangs-Sendeeinheiten umfaßt, die mit einem ortsfesten Zentralcomputer einer Fahrzeugleitstelle in Verbindung stehen.

In den öffentlichen Verkehrsmitteln des Nahverkehrs, wie U-Bahn, S-Bahn, Straßenbahn und Bussen, werden zum Brandschutz Feuerlöscher eingebaut, Sicherungen gegen eventuelle Kurzschlüsse vorgesehen sowie schwer entflammbare Materialien verwendet, Löschanlagen, Notöffnungen und Thermoschalter installiert. Ferner hängen Verhaltensanweisungen für den Gefahrensfall aus und eventuelle Notausgänge oder Notausstiege sowie dafür vorgesehene Nothämmer, Türschließeinrichtungen und Überwachung werden entsprechend farblich gekennzeichnet. All diese bekannten Einrichtungen sind jedoch nicht ausreichend, um Schäden von Personen und Fahrzeugen abzuwenden, sei es, daß eine Batterie oder ein Akkumulator explodiert oder durch einen Kurzschluß ein Fahrzeug in Brand gerät, im Bedarfsfall die Feuerlöscher oder die Verbandskästen nicht gefunden werden oder diese nicht regelmäßig überprüft wurden. Weitere Gefahren werden durch heißgelaufene Bremsscheiben, Rauchgasentwicklungen infolge von elektrischen Kurzschlüssen, durch Brandstiftung oder durch andere nicht vorhersehbare Einwirkungen heraufbeschworen.

Lediglich bei speziellen Fahrzeugen des Fernverkehrs, wie beim ICE, besteht eine kostenträchtige Funkübertragungseinrichtung von bestimmten Betriebsdaten an eine Leitstelle, mit welcher der Kilometerstand, die Temperatur verschiedener Aggregate, die Wartungszyklen und die Stromaufnahme der Motoren übermittelt werden. Eine solche Funkübertragung ist jedoch derart kostspielig, daß sie für den Nahverkehr nicht infrage kommt. Sie kann ferner nicht bei Fahrzeugen des öffentlichen Nahverkehrs verwendet werden, da sich die Gefahrenquellen in breiten Bereichen erheblich unterscheiden.

In der Veröffentlichung PROCEEDINGS OF IEEE VEHICULAR TECHNOLOGY SOCIETY - INTERNATIONAL CONFERENCE ON TRANSPORTATION ELECTRONICS, 15. September 1980, DEABORN, MICHIGAN, Seiten 1-5, ist ein Verfahren der eingangs genannten Art offenbart, bei welchem entlang der Fahrtroute in einer Entfernung von 670 m angeordnete Sendemasten mit einer Leitstelle verkabelt sind, über welche Fahrplanabweichungen an die betreffenden Busse zur Anzeige auf ihren mobilen Terminals übertragen werden. Computer bearbeiten diese Informationen zusammen mit dem Status und der Beladungsinformation zur Handhabung am Kontrollpult. Fahrzeugortsbestimmungen werden mittels magnetischer Impulse über Bewegmessersensoren bestimmt, die an jedem rechten Vorderrad des Fahrzeuges angebracht sind und durch Mikrowellenfunk oder durch die Sendemasten in 5 Kilometer-Intervallen entlang der Fahrtroute übertragen werden. Auf die gleiche Weise können Verkehrsunfälle, Feuerausbrüche und Raubüberfälle gemeldet werden. Beim Gegenstand dieses Dokumentes werden die Daten stets erst nach Eintritt eines Ereignisses oder für die Überwachung der Route, die Fahrplanentwicklung, den Durchführungsbericht, die Fahrgastinformation und die Verkehrssignalpriorität übermittelt. Dieses Verfahren für ein öffentliches Nahverkehrssystem erfordert nicht nur kostenträchtige Empfangs-Sendeeinheiten über relativ große Strecken von mindestens 670 m, sondern eine noch kostenträchtigere Verkabelung, wohingegen eine Früherkennung sowie eine Meldung von Fehler- und Gefahrenquellen vor Eintritt eines Ereignisses, wie sie beispielsweise beim vorgeschilderten ICE vorhanden sind, gänzlich fehlen.

Von diesem Stand der Technik ausgehend, liegt der Erfindung die Aufgabe zugrunde, ein Verfahren und eine Vorrichtung der eingangs genannten Art für den öffentlichen Nahverkehr zu schaffen, wobei mit möglichst einfachen sowie preisgünstigen Mitteln Betriebsdaten bei Störungen und Gefahren ohne kostenträchtige Fernmeldeeinrichtungen an den Führerstand des Fahrzeuges, die Fahrgasträume und an eine Leitstelle übermittelbar sind.

Diese Aufgabe wird erfindungsgemäß dadurch gelöst, daß ein jedes Fahrzeug an den mit möglichen Gefahren- und Fehlerquellen für Fahrgast und Fahrzeug verbundenen Einrichtungen mit Sensoren zur Datenerfassung von Türschließeinrichtungen, Temperaturen, Gas- und Rauchentwicklungen, Strom-, Spannungs-, Druck- und Drehzahländerungen versehen wird, diese Daten einem Fahrzeugcomputer des Fahrzeuges zugeleitet und gesammelt sowie bei Gefahr als Notruf über relativ kurze Entfernungen bis hin zu etwa 300 m mit einer Fahrzeug- und spezifischen Datenkennung von einer Ultraschall- oder Infrarot-Übertragungseinrichtung oder von einer zulassungsfreien Funkeinrichtung des Fahrzeuges als Empfangs-Sendeeinheit außer an den Führerstand des Fahrzeuges auch an sämtliche Empfangs-Sendeeinheiten, die sich zum Zeitpunkt der der Datenübermittlung innerhalb der Reichweite der den Notruf aussendenden Empfangs-Sendeeinheit befinden, übermittelt werden, wobei von empfangenden Fahrzeugen der Notruf duplizierend im Schneeballsystem so lange weitergeleitet wird, bis er eine ortsfeste Empfangs-Sendeeinheit erreicht und von dieser an den Zentralcomputer weitergeleitet und dort gespeichert wird. Auf diese Weise werden in jedem Fahrzeug an den möglichen Fehler- und Gefahrenquellen, wie Türschließeinrichtungen, Motoren, Akkumulatoren, Bremsen, elektrischen Schaltanlagen etc., entsprechende Sensoren angeordnet, welche diese Daten einem Fahrzeugcomputer des betreffenden Fahrzeuges zuleiten. Dieser Fahrzeugcomputer sammelt diese Daten und überträgt diese bei entsprechenden, eine Gefahr oder einen Notfall bedingenden Änderungen als Notruf über relativ kurze Entfernungen mit einer entsprechenden Fahrzeug- und spezifischen Datenkennung an eine Empfangs-Sendeeinheit in einem in der Nähe befindlichen Fahrzeug gleicher Art und/oder an eine an der Fahrtroute ortsfest angeordnete Empfangs-Sendeeinheit. Diese Empfangs-Sendeeinheit wird entweder von einer Ultraschall- oder Infrarot-Übertragungseinrichtung oder einer postfrequenzfreigegebenen Funkeinrichtung gebildet. All diese Übertragungseinrichtungen wirken zwar nur über relativ kurze Entfernungen von wenigen Metern bis hin zu etwa 300 m sind jedoch sehr preisgünstig und leicht installierbar. Auf diese Weise wird die Nachricht unter Umständen nach Art einer sich ständig vergrößernden Stafette über mehrere Fahrzeuge mit entsprechenden Empfangs-Sendeeinheiten so lange weitertransportiert, bis sie zu einem Zentralcomputer einer Fahrzeugleitstelle gelangt. Dabei werden die Notrufsignale über die Empfangs-Sendeeinheiten duplizierend an sämtliche begegnenden, vorbeifahrenden, überholenden oder in der Nähe stehenden Fahrzeuge gleicher Art von Fahrzeug zu Fahrzeug übermittelt. Da diese Daten nicht nur an den Führerstand des notrufsendenden Fahrzeuges, sondern auch an die Führerstände der den Notruf empfangenden Fahrzeuge gelangt, kann im Notfall auch von deren Fahrern rasche Hilfe geleistet werden. Dabei dient die Fahrzeugkennung zur Identifikation des die Notrufe aussendenden Fahrzeuges und die spezifische Datenkennung zur Identifikation des Notfalls, z.B. Brand, Explosion eines Akkumulators, Motorenstörung, Störung der Türschließanlage etc.

Da nicht unbedingt jede Datenänderung auch mit einer unmittelbaren Gefahr verbunden ist, werden nach einer vorteilhaften Weiterbildung der Erfindung sämtliche Daten entweder zeitlich permanent oder in relativ geringen, kontinuierlichen Zeitintervallen vom Fahrzeugcomputer einem Soll-lst-Wertvergleich unterzogen und bei einer Überschreitung einer Toleranzgrenze über die Empfangs-Sendeeinheit bestimmte Daten als Notruf mit der Fahrzeugkennung sowohl zum Führerstand des betreffenden Fahrzeuges als auch über die Empfangs-Sendeeinheit zum Führerstand eines in der Nähe befindlichen, vorbeifahrenden oder überholenden Fahrzeuges gleicher Art als auch an die in der Nähe befindlichen, ortsfesten Empfangs-Sendeeinheiten als auch in akustischer oder optischer Form an die Fahrgasträume übertragen. Dadurch können sowohl der Fahrer des betreffenden Fahrzeuges als auch die Fahrgäste und die Fahrer der in der Nähe befindlichen Fahrzeuge rasch über den Notruf informiert werden und entsprechende Hilfe leisten.

Vorteilhaft übermittelt der ortsfest installierte Zentralcomputer die Daten der Notrufsignale mit der entsprechenden Fahrzeugkennung und der spezifischen Datenkennung an dezentralisierte Computer einer Werkstatt, einer Betriebsleitung, einer Betriebsleitstelle oder Computern weiterer Dienststellen, mit denen er vernetzt ist. Dadurch können nicht nur unmittelbare Hilfestellungen, sondern auch die weiterführenden Hilfeleistungen in Form von Reparaturen unverzüglich sowie auf direktem Wege in Angriff genommen werden.

Nach einer besonders vorteilhaften Weiterbildung der Erfindung erfolgt die drahtlose Datenübermittlung der Notrufsignale mit der entsprechenden Fahrzeug- und der spezifischen Datenkennung permanent an sämtliche ortsfesten oder mobilen Empfangs-Sendeeinheiten innerhalb der Reichweite der Ultraschall- oder Infrarot-Übertragungseinrichtungen oder der postfrequenzfreigegebenen Funkeinrichtungen als Empfangs-Sendeeinheit duplizierend so lange im Schneeballsystem, bis sie vom ortsfesten Zentralcomputer erfaßt und gespeichert werden sowie ein bestätigender Rückruf an das die Notrufsignale aussendende Fahrzeug ergeht. Aufgrund der kurzen Reichweiten der mobilen Empfangs-Sendeeinheiten übernehmen die damit ausgerüsteten Fahrzeuge gleicher Art einen Datenbotendienst entweder an das nächstbefindliche, begegnende oder überholende Fahrzeug gleicher Art oder an eine ortsfeste Empfangs-Sendeeinheit so lange, bis der Zentralcomputer diese Daten erfaßt und gespeichert hat. Nach erfolgreicher Übermittlung der Daten an den Zentralcomputer und nach deren Abspeichern sowie nach einer erfolgreichen Rückmeldung an das die Notrufsignale aussendende Fahrzeug werden diese Daten vorteilhaft in den mobilen oder ortsfesten Empfangs-Sendeeinheiten vom Zentralcomputer aus gelöscht.

Der Kern der Erfindung besteht hiernach im wesentlichen darin, daß von jedem Fahrzeug selbsttätig ein "Notrufpaket geschnürt" werden kann und duplizierend im Schneeballsystem an begegnende oder überholende Fahrzeuge mit entsprechenden Empfangs-Sendeeinheiten gleicher Art oder an ortsfest installierte Empfangs-Sendeeinheiten weitergegeben werden kann, somit keine kosten- und montageaufwendigen Übertragungseinrichtungen erforderlich sind und diese Übertragung so lange erfolgt, bis sie an einen Zentralcomputer gelangt. Aufgrund der kurzen Übertragungsstrecke kann im Notfall von den Fahrern der in der Nähe befindlichen Fahrzeuge auf schnellstem Wege aktive Hilfe geleistet werden, da sich das die Notrufe aussendende Fahrzeug mit der entsprechenden Fahrzeugkennung aufgrund der kurzen Reichweite der Übertragungsstrecken in Sichtweite der begegnenden und überholenden Fahrzeuge befindet.

Unabhängig davon kann vom Zentralcomputer aus direkt über die damit vernetzten Computer weiterer Dienststellen rasche Hilfe geleistet werden.

Vorrichtungsmäßig wird das der Erfindung zugrundeliegende Problem dadurch gelöst, daß die Vorrichtung einerseits aus Temperatursensoren, Gas- und Rauchentwicklungs-Sensoren, Strom-, Spannungs- und Druckprüf- sowie Drehzahl-Meßgeräten und Mikroprozessoren besteht, deren ermittelte Daten entweder über ein Kabel innerhalb des Fahrzeuges oder kabellos über Ultraschall- oder Infrarot-Übertragungseinrichtungen oder zulassungsfreie Funkeinrichtungen als Empfangs-Sendeeinheit an einen im Fahrzeug befindlichen Fahrzeugcomputer weiterleitbar sind und andererseits aus von diesem bei Gefahr als Notruf über relativ kurze Entfernungen bis hin zu etwa 300 m mit einer Fahrzeug- und einer spezifischen Datenkennung von einer getrennten Ultraschall- oder Infrarot-Übertragungseinrichtung oder von einer zulassungsfreien Funkeinrichtung des Fahrzeuges als Empfangs-Sendeeinheit sämtlichen Empfangs-Sendeeinheiten, die sich zum Zeitpunkt der Datenübermittlung innerhalb der Reichweite der den Notruf aussendenden Empfangs-Sendeeinheit befinden, übermittelt werden, wobei von empfangenden Fahrzeugen die Daten des Notrufes duplizierend im Schneeballsystem so lange weitergeleitet wird, bis sie zu einer ortsfest installierten Empfangs-Sendeeinheit gelangen, die mit einem Modem und einer Verstärkereinrichtung versehen ist, von welcher die Daten des Notrufes an den Zentralcomputer, der mit mehreren Computern in einem damit verknüpften Netzwerk verbunden ist, übermittelt und dort gespeichert werden. So können beispielsweise von Druckprüf- und Spannungs-Meßgeräten sowohl die Türschließeinrichtungen kontrolliert, von Gas- und Rauchentwicklungs-Sensoren entstehende Brände festgestellt, z.B. bei einem Akkumulatorenbrand, von Temperatur-Sensoren die Temperaturen von Elektromotoren Bremsen und Rädern kontrolliert, von Stromprüfgeräten die Stromaufnahme von Motoren überprüft und all diese ermittelten Daten innerhalb des Fahrzeuges entweder drahtlos oder verkabelt an den installierten Fahrzeugcomputer übermittelt werden. Nach einem Soll-lst-Wertvergleich dieses Fahrzeugcomputers und der Feststellung eines außerhalb einer bestimmten Toleranzgrenze liegenden Datenwertes und einer damit verbundenen Gefahrenquelle sendet er die entsprechenden Daten über seine an jede Empfangs-Sendeeinheit eines ihn überholenden oder begegnenden Fahrzeuges gleicher Art oder bei Vorbeifahrt an einer ortsfest installierten Empfangs-Sendeeinheit, von dem diese Daten mit Modem und Verstärkereinrichtung an einen Zentralcomputer weitergeleitet werden, der mit dezentralisierten Computern, z.B. einer Werkstatt, einer Betriebsleitung, einer Betriebsleitstelle, der Feuerwehr etc., in einem Netzwerk verbunden ist.

Außerdem ist der Fahrzeugcomputer zur Übermittlung der Daten des Notrufes mit optischen Warnlampen und/oder Warnschrifttafeln sowie mit Lautsprechern zur akustischen Warnung sowohl mit den Fahrgasträumen als auch mit dem Fahrzeugführerstand drahtlos oder verkabelt verbunden. Dadurch erfolgt eine Direktwarnung sowohl des Fahrzeugführers als auch der Fahrgäste. Da der Fahrzeugcomputer ferner vorteilhaft mit Sensoren eines angekoppelten Fahrzeuges in Empfangsverbindung steht, erfolgen dort gleichfalls in der vorbeschriebenen Weise die Warnungen sowie die Datenübertragungen.

In machen Fahrzeugen sind bereits zur Aufnahme von Daten Mikroprozessoren vorhanden, die nachfolgend als Zusatzcomputer bezeichnet werden. In solch einem Fall sind nach einer vorteilhaften Weiterbildung der Erfindung die Daten von diesem im Fahrzeug bereits vorhandenen Zusatzcomputern zu den Daten des intelligent ausgerüsteten Fahrzeugcomputers von diesem auf eine einheitliche Datenstruktur übersetzbar und entweder direkt von ihm und/oder vom Zentralcomputer auswertbar. Dadurch brauchen diese Zusatzcomputer nicht durch neue Computer ersetzt werden, sondern lediglich alle Daten auf die Daten des intelligenten Fahrzeugcomputers kompatibel übersetzt werden.

Vorteilhaft ist die ortsfeste Empfangs-Sendeeinheit entweder verkabelt oder drahtlos mit entsprechender Sendeleistung direkt mit dem Zentralcomputer verbunden. Durch diese Ausbildung nehmen die Empfangs-Sendeeinheiten an den damit ausgerüsteten Fahrzeugen nach wie vor die Funktion von "rollenden Boten" ein, wohingegen die ortsfeste Empfangs-Sendeeinheit entlang den Fahrtrouten bei Übergabe eines Nachrichtenpaketes von einem Fahrzeug dieses auf direktem Wege an den Zentralcomputer übermittelt. Dabei kann diese direkte Verbindung von ortsfester Empfangs-Sendeeinheit entweder verkabelt, z.B. über ein örtliches Telefonnetz, oder drahtlos über einen Sender mit entsprechender Sendeleistung erfolgen.

Um vom Zentralcomputer aus nicht nur bei Gefahren, sondern auch bei Unregelmäßigkeiten verschiedener Fahrzeugaggregate oder bei Straßensperren Hindernissen etc. direkt in das Fahrzeug bzw. in die Fahrtroute des Fahrzeuges eingreifen zu können, sind vom Zentralcomputer aus Daten, Meldungen und Schaltfunktionen wahlweise über die Empfangs-Sendeeinheit entweder mit einer Fahrzeug- und spezifischen Datenkennung an ein bestimmtes Fahrzeug oder an mehrere Fahrzeuge übermittelbar.

Mehrere Ausführungsbeispiele der Erfindung sind in den Zeichnungen dargestellt. Dabei zeigen:
Fig. 1 die schematische Ansicht eines elektrifizierten Nahverkehrsfahrzeuges, wie S-Bahn oder Straßenbahn,
Fig. 2 das Schaltschema verschiedener Sensoren mit einem Fahrzeugcomputer und einer Empfangs-Sendeeinheit,
Fig. 3 die schematische Ansicht eines Nahverkehrsfahrzeuges in Form einer U-Bahn an einer stationären Empfangs-Sendeeinheit und einem damit in Verbindung stehenden Zentralcomputer mit Netzwerk und
Fig. 4 die Frontansichten zweier aneinander vorbeifahrender U-Bahn-Fahrzeuge von Fig. 3.

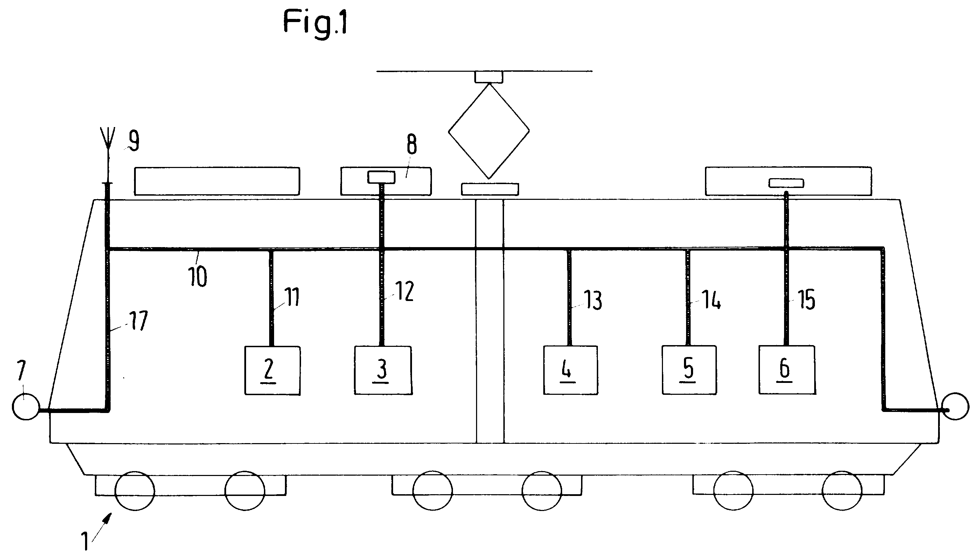

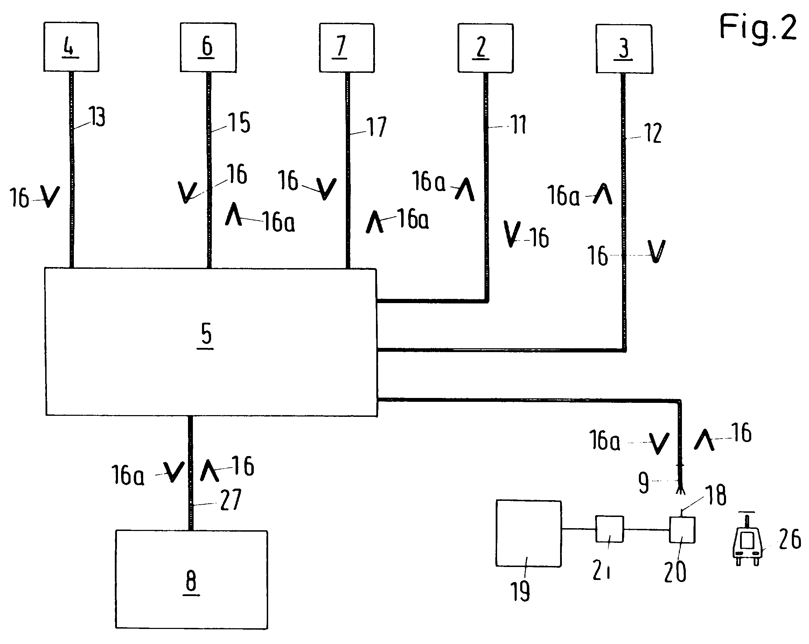

Gemäß den Figuren 1 und 2 befindet sich in einem Fahrzeug 1 des öffentlichen Nahverkehrs an den mit möglichen Gefahren- und Fehlerquellen für Fahrgast und Fahrzeug 1 verbundenen Einrichtungen 2, 4 und 6 nicht dargestellte Sensoren zur Datenerfassung, von denen beispielsweise mit 2 die Gesamtheit der Informationsgeräte für den Fahrer, mit 3 die Gesamtheit der Informationsgeräte für den Fahrgast, mit 4 Brandmeldesensoren, mit 5 der Fahrzeugcomputer, mit 6 die Überwachungseinrichtung für Notfälle, mit 7 eine Zugbusüberwachung, mit 8 eine Stromkreisabschaltung und mit 9 eine Empfangs-Sendeeinheit des Fahrzeuges bezeichnet sind. Diese Empfangs-Sendeeinheit 9 besteht entweder aus einer Ultraschall- oder aus einer Infrarot-Übertragungseinrichtung oder aus einer zulassungsfreien Funkeinrichtung. Diese Empfangs-Sendeeinheit 9 ist über die Leitung 10, die sowohl verkabelt als auch kabellos sein kann, außer mit sämtlichen Informationsgeräten 2 zur Fahrerinformation mit dem Führerstand des Fahrzeuges 1 als auch über die Informationsgeräte 3 für die Fahrgäste verbunden. Sämtliche Einrichtungen 2-9 sind über die Leitung 10 sowie über Abzweigleitungen 11-15 mit dem Fahrzeugcomputer 5 und über diesen mit der Empfangs-Sendeeinheit 9 verbunden.

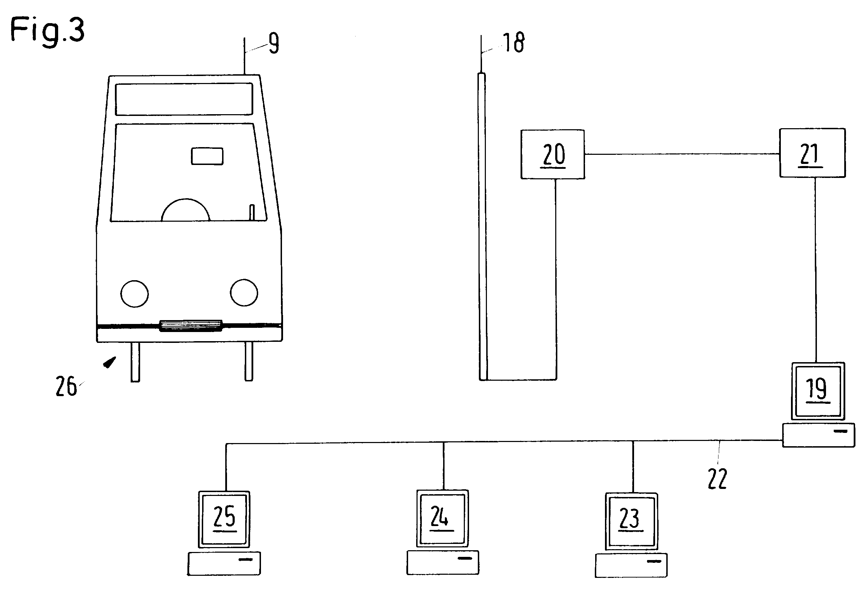

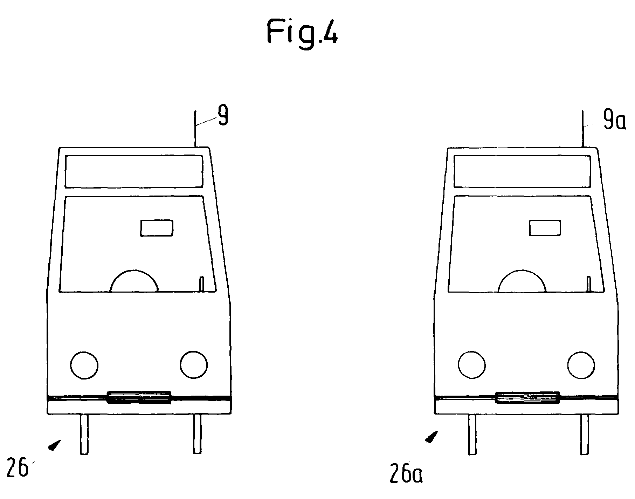

Das schematische Schaltbild des Fahrzeugcomputers 5 mit sämtlichen Einrichtungen 2-9 ist in Fig. 2 dargestellt. Der Fahrzeugcomupter 5 wird permanent oder in relativ geringen kontinuierlichen Zeitintervallen von sämtlichen Sensoren 4, 6, 7, 8 mit entsprechenden Daten gespeist, beispielsweise mit Daten zur Erfassung der Funktion von Türschließeinrichtungen, Strom-, Spannungs-, Druckprüf- sowie Drehzahl-Meßgeräten und Mikroprozessoren, von denen mit der Ziffer 6 beispielsweise eine Überwachungseinrichtung für Notfälle, mit der Ziffer 7 ein Gerät zur Überwachung der Stromaufnahme des betreffenden Elektromotors und mit der Ziffer 8 eine Stromkreisabschaltung symbolisiert werden. An den Fahrzeugcomputer 5 lassen sich eine beliebige Anzahl von Daten liefernden Geräten mit Mikroprozessoren anschließen. Diese von den Geräten 2, 3, 4, 6, 7 und 8 gelieferten Daten sind in Richtung zum Fahrzeugcomputer 5 in den Abzweigleitungen 11, 12, 13, 15, 17, 27 mit entsprechenden Pfeilen 16 versehen, während die vom Fahrzeugcomputer 5 ausgehenden Daten in den Abzweigleitungen 11, 12, 15, 17 und 27 von den Pfeilen 16a symbolisiert sind. Der Fahrzeugcomputer 5 unterzieht die ihm gelieferten Daten einem Soll-lst-Wertvergleich. Bei Überschreitung einer vorher eingegebenen Toleranzgrenze erkennt der Fahrzeugcomputer 5 als intelligent ausgestattetes Gerät die Abweichungen und übermittelt über die Empfangs-Sendeeinheit 9 diese Daten in Form eines Notrufes oder als Betriebsdaten mit der entsprechenden Kennung des Fahrzeuges 1, z.B. in Form einer bestimmten Fahrzeugnummer an sämtliche sich zum Zeitpunkt der Datenübermittlung in der Nähe befindlichen Empfangs-Sendeeinheiten 9a, 18, z.B. sowohl zum Führerstand des Fahrzeuges 1 als auch über die Empfangs-Sendeeinheit 9 zum Führerstand eines in der Nähe befindlichen Fahrzeuges 26, welches gerade das den Notruf sendende Fahrzeug 1 überholt, an ihm vorbeifährt oder sich in dessen Nähe befindet, oder an eine entlang der Fahrtroute stationär angeordnete Empfangs-Sendeeinheiten 18, die verkabelt oder per Funk mit dem Zentralcomputer 19 einer Fahrzeugleitstelle verbunden sind. Gemäß Fig. 3 steht die stationäre Empfangs-Sendeeinheit 18 über ein Modem 20 und einen Verstärker 21 mit dem Zentralcomputer 19 in Verbindung. Der Zentralcomputer 19 wiederum ist über ein Netzwerk 22 mit dezentralisierten Computern 23 einer Werkstatt, einem Computer 24 einer Betriebsleitstelle und einem Computer 25, beispielsweise eines Notdienstes oder der Feuerwehr, verbunden. Im dargestellten Fall der Figuren 3 und 4 erfolgt die Datenübermittlung beispielsweise eines einen Notruf aussendenden U-Bahn-Fahrzeuges 26 über die Empfangs-Sendeeinheit 9 im Vorbeifahren an die stationär angeordnete Empfangs-Sendeeinheit 18, über welche sodann über das Modem 20 und den Verstärker 21 die entsprechenden Daten an den Zentralcomputer 19 übermittelt werden.

Da jedoch zur Kostenersparnis diese ortsfesten Empfangs-Sendeeinheiten 18 in größeren Abständen angeordnet werden als in der Zeittaktentfernung zweier sich begegnender Fahrzeuge erfolgt die drahtlose Datenübermittlung eines Notrufes mit der entsprechenden Fahrzeugkennung permanent nicht nur an sämtliche in der Nähe befindlichen, ortsfesten Empfangs-Sendeeinheiten 18, sondern vornehmlich an sämtliche mobilen Empfangs-Sendeeinheiten 9a innerhalb der Reichweite der Ultraschall- oder Infrarot-Übertragungseinrichtungen oder der zulassungsfreien Funkeinrichtungen duplizierend so lange im Schneeballsystem, bis die Daten über eine stationär angeordnete Empfangs-Sendeeinheit 18 vom Zentralcomputer 19 erfaßt und gespeichert werden sowie von diesem 19 ein bestätigender Rückruf an das den Notruf aussendende Fahrzeug 1, 26 ergeht. Fahren beispielsweise zwei Fahrzeuge 26, 26a gemäß Fig. 4 in entgegengesetzten Richtungen aneinander vorbei und sendet das Fahrzeug 26 über seine Empfangs-Sendeeinheit 9 einen Notruf aus, werden diese von dem entgegenkommenden Fahrzeug 26a über dessen Empfangs-Sendeeinheit 9a erfaßt und sozusagen "per Expreß" an die nächste ortsfeste Empfangs-Sendeeinheit 18 und von dort auf direktem Wege zum Zentralcomputer 18 transportiert. Bei wenigen Minutentakten derartiger U-Bahn-Fahrzeuge ist die Wahrscheinlichkeit einer Direktübertragung der die Notrufe sendenden Empfangs-Sendeeinheit 9 an eine ortsfeste Empfangs-Sendeeinheit 18 geringer als eine mittelbare Übertragung von irgendeinem vorbeifahrenden Fahrzeug 26a, welches über seine Empfangs-Sendeeinheit 9a diese Notrufsignale aufgenommen hat und diese sowohl an jede ortsfeste Empfangs-Sendeeinheit 18 abgibt als auch an jede weitere mobile Empfangs-Sendeeinheit 9a eines weiteren entgegenkommenden oder sich in der Nähe befindlichen Fahrzeuges.

Durch dieses duplizierende Schneeballsystem gelangen die von der sendenden Empfangs-Sendeeinheit 9 ausgehenden Notrufe über die dann nächstgelegene, ortsfeste Empfangs-Sendeeinheit 18 zum Zentralcomputer 19. Dieser Zentralcomputer 19 erfaßt die Daten, speichert sie ab und gibt in umgekehrter Richtung (Pfeil 16a) eine erfolgreiche Rückmeldung an das den Notruf aussendende Fahrzeug 1, 26. Da die Datenübermittlung jeweils mit einer Fahrzeugkennung und mit einer spezifischen Datenkennung erfolgen, kann der Zentralcomputer 19 nicht nur diese Daten einem bestimmten Fahrzeug zuordnen, sondern auch eine Aussage über ihren spezifischen Inhalt, z.B. Brandmeldung in Motoren, zu hohe Stromaufnahme, zu heiße Bremsen, nichtfunktionierende Türschließanlage etc., treffen.

Da jede mit den entsprechenden Sensoren und Mikroprozessoren versehene Einrichtung 2, 3, 4, 6-8 mit einer bestimmten Datenkennung versehen ist, können sowohl der Fahrzeugcomputer 5 als auch der Zentralcomputer 19 diese Daten in entsprechende akustische und optische Signale umsetzen und diese nicht nur an den Bildschirmen des zugeordneten Zentralcomputers 19 und den damit vernetzten, dezentralisierten Computem 23-25 erscheinen lassen, sondern auch per Bild- und/oder Ton sowohl dem Fahrzeugführerstand als auch den Fahrgasträumen übermitteln. Dies kann über entsprechend beschriftete und intervallweise aufleuchtende Warntafeln und/oder über Lautsprecher erfolgen. Nach erfolgreicher Rückmeldung an das die Signale aussendende Fahrzeug 1 werden vom Zentralcomputer 19 aus die Daten in den übermittelnden Empfangs-Sendeeinheiten 9a gestoppt bzw. gelöscht.

Der Zentralcomputer 19 hat außerdem die Möglichkeit, Datenmeldungen und Schaltfunktionen wahlweise über die Empfangs-Sendeeinheiten 18, 9a mit einer entsprechenden Fahrzeug- und einer spezifischen Datenkennung entweder an ein bestimmtes Fahrzeug oder an mehrere Fahrzeuge zu übermitteln. Dabei kann der Fahrzeugcomputer 5 auch direkt in den Betrieb eines Fahrzeuges 1, 26 eingreifen. Erreicht das Fahrzeug 1 oder 26 eine günstige Position, beispielsweise einen Bahnhof oder eine Haltestelle, kann der Zentralcomputer 19 über die ortsfest installierte Empfangs-Sendeeinheit 18 und/oder eine mobile Empfangs-Sendeeinheit 9a die Stromabschaltung der Stromkreiseinrichtung 8 bewirken, um das defekte Fahrzeug 1, 26 an einer Weiterfahrt zu hindern, sämtliche Fahrgäste aussteigen zu lassen und sodann dieses Fahrzeug 1, 26 unverzüglich einer Werkstattüberprüfung zuzuführen.

Da erfindungsgemäß die Daten innerhalb von relativ kurzen Strecken mittels einer Ultraschall- oder Infrarot-Übertragungseinrichtung oder einer zulassungsfreien Funkeinrichtung übermittelt werden, können die hierfür erforderlichen Vorrichtungen und Einrichtungen sehr preiswert gestaltet werden. Da außerdem die Datenübermittlung nicht nur an ortsfeste Empfangs-Sendeeinheiten 18 gebunden ist, sondern die entsprechende Datenübermittlung überwiegend über mobile Empfangs-Sendeeinheiten 9a von begegnenden, überholenden oder in der Nähe befindlichen Fahrzeugen gleicher Art erfolgt, kann dem die Notrufe aussendenden Fahrzeug 1 auch rasche Hilfe durch die Fahrzeugführer dieser in der Nähe befindlichen Fahrzeuge zuteil werden. Und schließlich fungieren bei diesem Übertragungsverfahren die mobilen Empfangs-Sendeeinheiten 9a als "rollender Bote", bis die Daten über eine ortsfeste Empfangs-Sendeeinheit 18 zum Zentralcomputer 19 gelangen.

Dabei versteht es sich, daß im Rahmen der Erfindung Abwandlungen ebenso möglich sind wie Vereinfachungen und Erweiterungen. So können an dem Fahrzeugcomputer 5 selbstverständlich auch Mikroprozessoren und Sensoren zur Drehzahlmessung, Spannungs- und Stromüberprüfung, Temperaturmessung, Druckmessung von hydraulischen Steuergeräten ebenso angeschlossen werden wie Brandmelde- und Rauchgasentwicklungssensoren. Auch Fahrgastnotrufe, z.B. bei plötzlicher Erkrankung oder bei Überfällen, können auf diese Weise aus den Fahrgasträumen per Knopfdruck einem Fahrzeugcomputer 5, von dort an den Fahrzeugführerstand und/oder an entgegenkommende, in der Nähe befindliche oder überholende Fahrzeuge in der vorbeschriebenen Weise übermittelt werden.

### Bezugszeichenliste:

- Fahrzeug: 1, 26, 26a
- Informationsgeräte für den Fahrer: 2
- Informationsgeräte für den Fahrgast: 3
- Brandmeldesensoren: 4
- Fahrzeugcomputer: 5
- Überwachungseinrichtung: 6
- Zugbusüberwachung: 7
- Stromkreisabschaltung: 8
- mobile Empfangs-Sendeeinheiten: 9, 9a
- Leitung: 10
- Abzweigleitungen: 11-15, 17, 27
- Pfeil: 16, 16a
- ortsfeste Empfangs-Sendeeinheit: 18
- Zentralcomputer: 19
- Modem: 20
- Verstärker: 21
- Netzwerk: 22
- dezentralisierte Computer: 23-25

## Patentansprüche

1. Verfahren zur Früherkennung und Meldung von Fehlern und Gefahren für ein öffentliches Nahverkehrssystem, welches schienengebundene oder schienenlose Fahrzeuge mit Empfangs-Sendeeinheiten (9a, 9) sowie ortsfeste Empfangs-Sendeeinheiten (18) umfaßt, die mit einem ortsfesten Zentralcomputer (19) einer Fahrzeugleitstelle in Verbindung stehen, **dadurch gekennzeichnet**, daß ein jedes Fahrzeug (1, 26 bzw. 26a) an den mit möglichen Gefahren- und Fehlerquellen für Fahrgast und Fahrzeug verbundenen Einrichtungen (4, 6-8) mit Sensoren zur Datenerfassung von Türschließeinrichtungen, Temperaturen, Gas- und Rauchentwicklung, Strom-, Spannungs-, Druck- und Drehzahländerungen versehen wird, diese Daten einem Fahrzeugcomputer (5) des Fahrzeuges (1, 26, 26a) zugeleitet und gesammelt sowie bei Gefahr als Notruf über relativ kurze Entfernungen bis hin zu etwa 300 m mit einer Fahrzeug- und einer spezifischen Datenkennung von einer Ultraschall- oder Infrarot-Übertragungseinrichtung oder von einer zulassungsfreien Funkeinrichtung des Fahrzeuges (1, 26, 26a) als Empfangs-Sendeeinheit (9) außer an den Führerstand des Fahrzeuges (1, 26, 26a) auch an sämtliche Empfangs-Sendeeinheiten (9a, 18), die sich zum Zeitpunkt der Datenübermittlung innerhalb der Reichweite der den Notruf aussendenden Empfangs-Sendeeinheit (9) befinden, übermittelt werden, wobei von empfangenden Fahrzeugen (1, 26a) der Notruf duplizierend im Schneeballsystem so lange weitergeleitet wird, bis er eine ortsfeste Empfangs-Sendeeinheit (18) erreicht und von dieser (18) an den Zentralcomputer (19) weitergeleitet und dort gespeichert wird.

2. Verfahren nach Anspruch 1, **dadurch gekennzeichnet**, daß sämtliche Daten entweder zeitlich permanent oder in relativ geringen, kontinuierlichen Zeitintervallen vom Fahrzeugcomputer (5) einem Soll-lst-Wertvergleich unterzogen und bei Überschreitung einer Toleranzgrenze über die Empfangs-Sendeeinheit (9) bestimmte Daten als Notruf mit der Fahrzeugkennung sowohl zum Führerstand des betreffenden Fahrzeuges (1, 26) als auch über die Empfangs-Sendeeinheit (9, 9a) zum Führerstand eines in der Nähe befindlichen oder während der Fahrt begegnenden Fahrzeuges (9a, 26a) gleicher Art als auch an die in der Nähe befindlichen ortsfesten Empfangs-Sendeeinheiten (18) als auch in akustischer oder optischer Form an die Fahrgasträume übertragen werden.

3. Verfahren nach Anspruch 1 und 2, **dadurch gekennzeichnet**, daß der ortsfest installierte Zentralcomputer (19) die Daten des Notrufes mit der entsprechenden Fahrzeugkennung an dezentralisierte Computer (23, 24, 25) einer Werkstatt, einer Betriebsleitung, einer Betriebsleitstelle oder Computern weiterer Dienststellen übermittelt, mit denen er (19) vernetzt wird.

4. Verfahren nach einem der Ansprüche 1 bis 3, **dadurch gekennzeichnet**, daß ein bestätigender Rückruf an das den Notruf aussendende Fahrzeug (1, 26) mit dem gleichen Schneeballsystem übermittelt wird.

5. Verfahren nach einem der Ansprüche 1 bis 4, **dadurch gekennzeichnet**, daß nach erfolgreicher Übermittlung der Daten an den Zentralcomputer (19) und nach deren Speichern sowie nach einer erfolgreichen Rückmeldung an das den Notruf aussendende Fahrzeug (1, 26) diese Daten in den mobilen oder ortsfesten Empfangs-Sendeeinheiten (9a, 18) vom Zentralcomputer (19) aus gelöscht werden.

6. Vorrichtung zur Früherkennung und Meldung von Fehlern und Gefahren für ein öffentliches Nahverkehrssystem, welches schienengebundene oder schienenlose Fahrzeuge mit Empfangs-Sendeeinheiten (9a, 9) sowie ortsfeste Empfangs-Sendeeinheiten (18) umfaßt, die mit einem ortsfesten Zentralcomputer (19) einer Fahrzeugleitstelle in Verbindung stehen, zur Durchführung des Verfahrens nach den Ansprüchen 1 bis 5, **dadurch gekennzeichnet**, daß die Vorrichtung aus Temperatursensoren, Gas- und Rauchentwicklungs-Sensoren, Strom-, Spannungs-, Druckprüf- sowie Drehzahl-Meßgeräten und Mikroprozessoren (4, 6-8) besteht, deren ermittelte Daten entweder über ein Kabel innerhalb des Fahrzeuges (1, 26, 26a) oder kabellos über eine Ultraschall- oder Infrarot-Übertragungseinrichtung oder eine zulassungsfreie Funkeinrichtung als Empfangs-Sendeeinheit an einen im Fahrzeug (1, 26, 26a) befindlichen Fahrzeugcomputer (5) weiterleitbar sind und von diesem bei Gefahr als Notruf über relativ kurze Entfernungen bis hin zu etwa 300 m mit einer Fahrzeug- und einer spezifischen Datenkennung von einer getrennten Ultraschall- oder Infrarot-Übertragungseinrichtung oder von einer zulassungsfreien Funkeinrichtung des Fahrzeuges (1, 26, 26a) als Empfangs-Sendeeinheit (9) sämtlichen Empfangs-Sendeeinheiten (9a, 18), die sich zum Zeitpunkt der Datenübermittlung innerhalb der Reichweite der den Notruf aussendenden Empfangs-Sendeeinheit (9) befinden, übermittelt werden, wobei von empfangenden Fahrzeugen (1, 26a) die Daten des Notrufes duplizierend im Schneeballsystem so lange weitergeleitet werden, bis sie zu einer ortsfest installierten Empfangs- Sendeeinheit (18) gelangen, die mit einem Modem (20) und einer Verstärkereinrichtung (21) versehen ist, von welcher (18) die Daten des Notrufes an den Zentralcomputer (19), der mit mehreren Computern (23-25) in einem damit verknüpften Netzwerk (22) verbunden ist, übermittelt und dort gespeichert werden.

7. Vorrichtung nach Anspruch 6, **dadurch gekennzeichnet**, daß der Fahrzeugcomputer (5) zur Übermittlung der Daten der Notrufe mit optischen Warnlampen und/oder Warnschrifttafeln sowie mit Lautsprechern zur akustischen Warnung sowohl mit den Fahrgasträumen als auch mit dem Fahrzeugführerstand drahtlos oder verkabelt verbunden ist.

8. Vorrichtung nach Anspruch 6, **dadurch gekennzeichnet**, daß der Fahrzeugcomputer (5) drahtlos oder verkabelt auch mit Sensoren eines angekoppelten Fahrzeuges (1, 26, 26a) in Empfangsverbindung steht.

9. Vorrichtung nach einem der Ansprüche 6 bis 8, **dadurch gekennzeichnet**, daß vom Zentralcomputer (19) aus Daten, Meldungen und Schaltfunktionen wahlweise über die Empfangs-Sendeeinheiten (9, 9a, 18) entweder mit einer Fahrzeug- und spezifischen Datenkennung an ein bestimmtes Fahrzeug (1, 26, 26a) oder an mehrere Fahrzeuge (1, 26, 26a) übermittelbar sind.

10. Vorrichtung nach einem der Ansprüche 6 bis 9, **dadurch gekennzeichnet**, daß die Daten von im Fahrzeug bereits vorhandenen Zusatzcomputern zu den Daten des intelligenten Fahrzeugcomputers (5) von diesem (5) auf eine einheitliche Datenstruktur übersetzbar und entweder direkt von ihm (5) und/oder vom Zentralcomputer (19) auswertbar sind.

11. Vorrichtung nach einem der Ansprüche 6 bis 10, **dadurch gekennzeichnet**, daß die ortsfeste Empfangs-Sendeeinheit (9) entweder verkabelt oder drahtlos mit entsprechender Sendeleistung direkt mit dem Zentralcomputer (19) verbunden ist.

## Claims

1. Method for the early detection and indication of errors and dangers for a regional public transport system which comprises railborne or trackless vehicles having receiving-transmitting units (9a, 9) and stationary receiving-transmitting units (18) which are connected to a stationary central computer (19) of a vehicle control centre, characterised in that each vehicle (1, 26 and 26a) is provided on the devices (4, 6-8), which are connected to the possible sources of danger and error for passenger and vehicle, with sensors for the purpose of detecting data from door closing devices, the development of temperatures, gas and smoke and changes in current, voltage, pressure and rotational speed, this data is fed to a vehicle computer (5) of the vehicle (1, 26, 26a) and collected and in the event of danger transmitted as an emergency call over relatively short distances up to approximately 300 m with a vehicle and specific data identification by virtue of an ultra-sound or infrared transmitting device or by virtue of a license exempted radio device of the vehicle (1, 26, 26a) as a receiving-transmitting unit (9) not only to the driver's cab of the vehicle (1, 26, 26a) but also to all of the receiving-transmitting units (9a, 18) which at the time of the data transmission are located within the working range of the receiving-transmitting unit (9) which is transmitting the emergency call, wherein the emergency call is repeatedly relayed in an accumulative system by receiving vehicles (1, 26a) for a period of time until it reaches a stationary receiving-transmitting unit (18) and is relayed from said receiving-transmitting unit (18) to the central computer (19) and stored therein.

2. Method according to claim 1, characterised in that all of the data is subjected to a desired-actual-value comparison by the vehicle computer (5) in either a permanent manner with respect to time or in relatively short, continuous time intervals and, in the event that a tolerance limit is exceeded, data which is determined by way of the receiving-transmitting unit (9) is transmitted as an emergency call with the vehicle identification to the driver's cab of the relevant vehicle (1, 26) and by way of the receiving-transmitting unit (9, 9a) to the driver's cab of a vehicle (9a, 26a) of the same type, which is located in the vicinity or approaching during the journey, and to the stationary receiving-transmitting units (18) located in the vicinity, and transmitted to the passenger areas in an acoustic or optical manner.

3. Method according to claim 1 and 2, characterised in that the fixedly installed central computer (19) transmits the data of the emergency call with the relevant vehicle identification to decentralised computers (23, 24, 25) of a workshop, an operational management department, operational management centre or to computers of further service centres with which said central computer (19) is linked.

4. Method according to any one of the claims 1 to 3, characterised in that a return call as a confirmation is transmitted using the same accumulative process to the vehicle (1, 26) which transmits the emergency call.

5. Method according to any one of the claims 1 to 4, characterised in that after the data has been successfully transmitted to the central computer (19) and after said data has been stored and after a successful return call to the vehicle (1, 26) which is transmitting the emergency call, this data in the mobile or stationary receiving-transmitting units (9a, 18) is erased by the central computer (19).

6. Method for the early detection and indication of errors and dangers for a regional public transport system which comprises railborne or trackless vehicles having receiving-transmitting units (9a, 9) and stationary receiving-transmitting units (18) which are connected to a stationary central computer (19) of a vehicle control centre, for the purpose of carrying out the method according to the claims 1 to 5, characterised in that the device consists of temperature sensors, gas and smoke development sensors, current, voltage, pressure testing and rotational speed measuring devices and microprocessors (4, 6-8) whose ascertained data can be passed either by way of a cable within the vehicle (1, 26, 26a) or without cable by way of an ultra-sound or infrared transmission device or by way of a license exempted radio device as a receiving-transmitting unit to a vehicle computer (5) located in the vehicle (1, 26, 26a) and in the event of danger is transmitted by said vehicle computer as an emergency call over relatively short distances up to approximately 300 m with a vehicle and specific data identification by virtue of separate ultra-sound or infrared transmitting device or by virtue of a license exempted radio device of the vehicle (1, 26, 26a) as a receiving-transmitting unit (9) to all receiving-transmitting units (9a, 18) which at the time of the data transmission are located within the working range of the receiving-transmitting unit (9) which is transmitting the emergency call, wherein the data of the emergency call is repeatedly relayed in an accumulative process by the receiving vehicles (1, 26a) for a period of time until said data reaches a fixedly installed receiving-transmitting unit (18) which is provided with a modem (20) and an amplifying device (21) from which said receiving-transmitting unit (18) the data of the emergency call is transmitted to the central computer (19) and stored therein, the said central computer being connected to several computers (23-25) in a network (22) linked thereto.

7. Device according to claim 6, characterised in that the vehicle computer (5) for the purpose of transmitting the data of the emergency calls is connected by cable or without cable to optical warning lamps and/or warning boards and to loud speakers for the purpose of providing an acoustic warning both to the passenger areas and to the driver's cab.

8. Device according to claim 6, characterised in that the vehicle computer (5) is also receivably connected by cable or without cable to the sensors of a connected vehicle (1, 26, 26a).

9. Device according to any one of the claims 6 to 8, characterised in that data, messages and switching functions can be transmitted selectively from the central computer (19) by way of the receiving-transmitting units (9, 9a, 18) either to a particular vehicle (1, 26, 26a) or to several vehicles (1, 26, 26a) with a vehicle and specific data identification.

10. Device according to any one of the claims 6 to 9, characterised in that the data from the auxiliary computers already provided in the vehicle can be converted to a uniform data structure by the vehicle computer (5) to suit the data of the intelligent vehicle computer (5) and said data can be evaluated either directly by said vehicle computer (5) and/or by the central computer (19).

11. Device according to any one of the claims 6 to 10, characterised in that the stationary receiving-transmitting unit (9) is directly connected to the central computer (19) either by cable or without cable using corresponding transmitting power.

## Revendications

1. Procédé pour la détection rapide et la signalisation de dérangements et de dangers pour un système public de trafic à petite distance, qui comporte des véhicules sur rails ou sans rail, munis d'unités émettrices et réceptrices (9a, 9) ainsi que des unités émettrices et réceptrices fixes (18), qui sont en communication avec un ordinateur central fixe (19) d'un poste de commande des véhicules,
caractérisé en ce qu'on munit les équipements (4,6-8) de chaque véhicule (1, 26, ou 26a), sources de dangers et de dérangements possibles pour les passagers et les véhicules, de senseurs pour le captage des données des installations de fermeture des portes, de température, de formation de gaz et de fumées, de variations de courant, de tension, de pression et de vitesse de rotation, en ce qu'on transmet ces données à un ordinateur (5) du véhicule (1, 26, 26a), on les collecte et on les transmet, en cas de danger, comme signal de détresse, avec une caractérisation du véhicule et une caractérisation spécifique des données, à l'aide d'une installation de transmission d'ultrasons ou d'infrarouges ou d'ondes radio, libre d'agrément, solidaire du véhicule (1, 26, 26a), servant d'unité émettrice et réceptrice (9), sur des distances relativement courtes allant jusqu'à environ 300 m à, outre le poste de conduite du véhicule (1, 26, 26a), également toutes les unités émettrices et réceptrices (9a, 18) qui, au moment de la transmission des données, se trouvent dans le rayon d'action de l'unité émettrice et réceptrice (9) qui émet le signal de détresse, le signal de détresse étant dupliqué selon le principe de la boule de neige par les véhicules récepteurs (1, 26a) jusqu'à ce qu'il atteint une unité émettrice et réceptrice fixe (18) et est transmis par celle-ci (18) à l'ordinateur central (19) pour y être mémorisé.

2. Procédé selon la revendication 1 caractérisé en ce qu'on soumet de façon permanente ou selon des intervalles de temps continus relativement courts, toutes les données à une comparaison par l'ordinateur du véhicule (5) des valeurs réelles aux valeurs de consigne, et en ce que, en cas de dépassement d'une limite de tolérance, on transmet certaines données via l'unité émettrice et réceptive (9), à titre de signal de détresse avec la caractérisation du véhicule, au poste de conduite du véhicule concerné (1,26) ainsi que, via l'unité émettrice et réceptrice (9,9a) au poste de conduite d'un véhicule (9a,26a) du même type qui se trouve à proximité ou rencontré en cours de déplacement, ainsi qu'à des unités émettrices et receptives fixes (18) qui se trouvent à proximité, ainsi que, sous forme acoustique ou optique aux espaces réservés aux passagers.

3. Procédé selon les revendications 1 et 2 caractérisé en ce que l'ordinateur central fixe (19) transmet les données du signal de détresse avec la caractérisation de véhicule correspondante à des ordinateurs décentralisés (23,24,25) d'un atelier, d'une direction d'exploitation, d'un poste de commande de réseau ou à des ordinateurs d'autres points de service, auxquels il est connecté en réseau.

4. Procédé selon l'une des revendications 1 à 3 caractérisé en ce qu'on transmet un signal de retour de confirmation au véhicule (1,26) qui a émis le signal de détresse, selon le même principe de boule de neige.

5. Procédé selon l'une des revendications 1 à 4 caractérisé en ce que l'ordinateur central (19) efface les données dans les unités émettrices et réceptrices mobiles et fixes (9a,18), après transmission réussie de ces données à l'ordinateur central (19) et après mémorisation de celles-ci ainsi qu'après signal de retour réussi au véhicule (1,26) qui a émis le signal de détresse.

6. Dispositif pour la détection rapide et la signalisation de dérangements et de dangers pour un système public de trafic à petite distance, qui comporte des véhicules sur rails ou sans rail, munis d'unités émettrices et réceptrices (9a, 9) ainsi que des unités émettrices et réceptrices fixes (18), qui sont en communication avec ordinateur central fixe (19) d'un poste de commande des véhicules, pour la mise en oeuvre du procédé selon les revendications 1 à 5, caractérisé en ce qu'il consite en des capteurs de température, de formation de gaz et de fumées, ou des appareils de mesure de courant, de tension, de pression ainsi que de vitesse de rotation, et de microprocesseurs (4,6-8) dont les données captées sont tansmissibles par un câble à l'intérieure du véhicule (1,26,26a) ou, sans câble, par une installation de transmission par ultrasons ou infrarouges ou par ondes radio, libre d'agrément, servant d'unité émettrice et réceptrice, à un ordinateur solidaire du véhicule (5) qui se trouve dans le véhicule (1,26,26a), et, de celui-ci, en cas de dangers, à titre de signal de détresse, avec une caractérisation du véhicule et une caractérisation spécifique des données, sur des distances relativement courtes allant jusqu'a environ 300 m, à l'aide d'une installation séparée de transmission d'ultrasons ou d'infrarouges ou d'ondes radio, libre d'agrément, solidaire du véhicule (1,26, 26a), servant d'unité émettrice et réceptrice (9), à toutes les unités émettrices et receptrices (9a, 18) qui se trouvent dans le rayon d'action de l'unité émettrice et réceptrice (9) qui émet le signal de détresse, au moment de la transmission des données, le signal de détresse étant dupliqué selon le principe de la boule de neige par les véhicules récepteurs (1,26a) jusqu'à ce qu'il atteint une unité émettrice et réceptrice fixe (18) qui est munie d'un moteur (20) et d'une installation d'amplification (21); d'où (18) les données du signal de détresse sont transmises à l'ordinateur central (19) qui est relié en réseau (22) avec plusieurs ordinateurs (23,25), pour y être mémorisées.

7. Dispositif selon la revendication 6 caractérisé en ce que l'ordinateur du véhicule (5) est relié par câbles ou sans câble à des lampes d'alarme et/ou tableaux d'alarme optiques ainsi qu'à des haut-parleurs pour l'alarme acoustique ainsi qu'aux espaces pour passagers et au poste de conduite, en vue de la transmission des données des signaux de détresse.

8. Dispositif selon la revendication 6 caractérisé en ce que l'ordinateur du véhicule (5) est relié par câbles ou sans câble à des capteurs d'un véhicule accouplé (1, 26,26a) de façon à pouvoirrecevoir des signaux.

9. Dispositif selon l'une des revendications 6 à 8 caractérisé en ce que les données, messages et fonctions de commande sont transmissibles de l'ordinateur central (19), par les unités émettrices et receptrices (9,9a,18), au choix à un véhicule déterminé (1,26,26a) moyennant une caractérisation du véhicule et des données, ou à plusieurs véhicules (1,26,26a).

10. Dispositif selon l'une des revendications 6 à 9 caractérisé en ce que les données d'ordinateurs auxiliaires déjà présents dans le véhicule sont traduisibles, avec les données de l'ordinateur de véhicule intelligent (5), par celui-ci (5) en une structure de données uniforme et sont exploitables directement par ce dernier (5) et/ou par l'ordinateur central (19).

11. Dispositif selon la revendication 6 à 10 caractérisé en ce que l'unité émettrice et réceptrice fixe (9) est reliée par câbles ou sans câble directement à l'ordinateur central (19) , moyennant puissance émettrice correspondante.
